# EUROPEAN PATENT APPLICATION

(11) **EP 2 377 954 A1**
(43) Date of publication of application: **19.10.2011**
(21) Application number: 09833139.0
(22) Date of filing: 02.12.2009
(51) Int. Cl.: C21D 9/46, B21B 1/22, C22C 38/40, F16J 15/08

(54) **METHOD FOR PRODUCING STEEL SHEET FOR GASKET, AND GASKET**

(30) Priority: 19.12.2008 JP 2008324346
(71) Applicant: NOK Corporation, Minato-ku Tokyo 105-8585 (JP)
(72) Inventor: NAKAO, Takashi, Nihonmatsu-shi Fukushima 964-0811 (JP); TANAKA, Nobuaki, Nihonmatsu-shi Fukushima 964-0811 (JP)
(74) Representative: Gulde Hengelhaupt Ziebig & Schneider
(86) International application number: PCT/JP2009/006541
(87) International publication number: WO 2010/070829

(57) **Abstract**

The present invention aims at providing: a method for manufacturing such a kind of gasket-oriented steel plate excellent in elasticity and formability, in a manner to allow for reduction of a breaking elongation of the steel plate to thereby improve a formability (punchability) thereof while improving a proof stress of the steel plate against a repeated stress from a discharge valve to thereby maintain a higher elasticity of the steel plate; and a gasket withstandable to the repeated stress from the discharge valve. The manufacturing method of a gasket-oriented steel plate of the present invention comprises the steps of: annealing a starting steel material having a composition of: Mn less than 0.5%, Ni less than 2.0%, and Cr less than 12.0%; and subsequently temper rolling the annealed starting steel material at a rolling reduction ratio of 10% or more; and the gasket of the present invention is formed by adopting a gasket-oriented steel plate obtained by the above manufacturing method.

## Description

### TECHNICAL FIELD

The present invention relates to a manufacturing method of a gasket-oriented steel plate and a gasket formed by adopting the gasket-oriented steel plate obtained by the manufacturing method of a gasket-oriented steel plate, which may be used in a compressor of an automobile air conditioner or the like, and particularly to a manufacturing method capable of manufacturing a gasket-oriented steel plate excellent in elasticity and formability, and a gasket withstandable to a repeated stress from a discharge valve.

### BACKGROUND ART

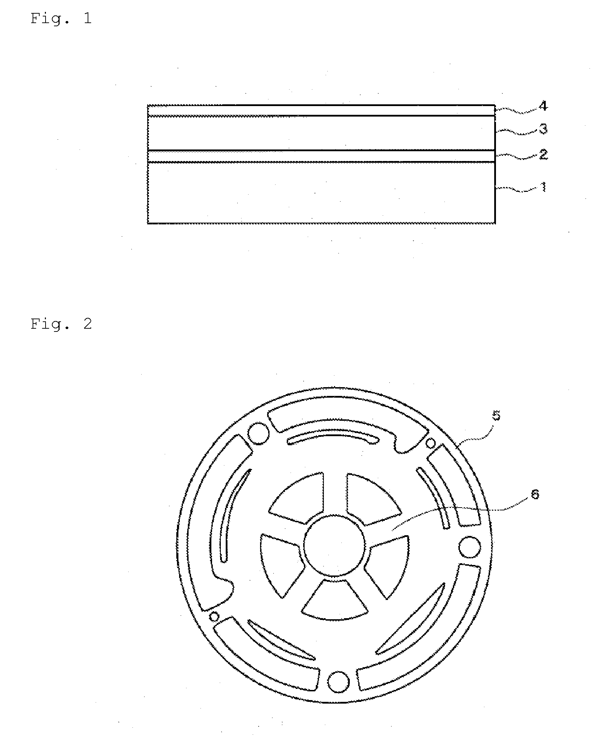

Conventionally, as a sealing part for oil, gas, and the like to be used at high temperatures in a field of automobile, a rubber coated metal having a structure shown in FIG. 1 is known. In FIG. 1, reference numeral 1 designates a steel plate, 2 an adhesive layer, 3 a rubber layer, and 4 a surface coating material layer.

The rubber coated metal shown in FIG. 1 is formed into a gasket as shown in FIG. 2, which is to be widely used in a compressor of an automobile air conditioner. In FIG. 2, reference numeral 5 designates a bead, and 6 a retainer.

Examples of functions of a gasket include a shape keeping function as a basic one, and a fluid sealing function by an embossed bead of the gasket.

Further, the functions of the gasket include a particularly important one to be achieved by a "retainer" drawn at a central part of the gasket. Automobile air conditioners are each configured to use flon as a cooling medium, and to conduct an exchange of thermal energy by a cycle of compression, liquefaction, and evaporation of flon. The compressed flon is transferred to a next stage by opening and closing of a discharge valve. The discharge valve is controlled in an opening/closing amount thereof by the retainer fabricated on the gasket. Since the discharge valve is contacted with the gasket at a frequency on the order of 4,000 to 9,000 times/minute, the retainer is required to possess a higher strength and a higher elasticity.

Conventionally, SPCC materials excellent in formability have been used, because more inexpensive dies (such as SKD11 (JIS G4404)) are to be used in a punching step for a lower cost, for example. However, materials equivalent to those prescribed in JIS G3141, which are versatilely available from steel plate manufacturers, for example, are excellent in formability and insufficient in elasticity, so that such a phenomenon is recognized that the formed gasket fails to fully withstand a stress from a discharge valve, thereby causing damages of a retainer of the gasket.

Further, although it is possible to provide a countermeasure to cracks of a retainer when a metal having a higher elasticity such as a high tensile strength steel plate is adopted therefor, it is then required to use a punching die having a higher hardness (such as high speed steel, cemented carbide, or the like), which is disadvantageous in cost.

Disclosed in Patent Document 1 is a manufacturing method of a stainless steel plate for a flapper valve, and particularly a method for manufacturing a stainless steel plate for a flapper valve, which steel plate has an improved fatigue property, is high in hardness and is thus less in occurrence of burrs after punching, and is subjected to a cold rolling at a rolling reduction ratio of 5% or more. Apparently, it is classified into a stainless steel plate, because it contains 2.0 to 6.0 mass% of Ni, and 12.0 to 20.0 mass% of Cr.

However, no disclosures are found in the technique of Patent Document 1 about a cold rolled steel plate (SPCC), because the technique relates to a stainless steel plate.

Meanwhile, described in Patent Document 2 is a manufacturing method of a cold rolled steel plate for a gasket material, comprising the steps of: hot rolling a continuously cast article produced by a continuous casting method comprising Mn: 0.5 to 3.0%, Ni:≤1.2%, and balacne Fe and inevitable impurities; hot rolling it; acid pickling it; and cold rolling it at a rolling reduction ratio of 30 to 90%. In the Patent Document 2, it is clarified in its paragraph [0032] that Mn is a component required to be included at 0.5% or more so as to prevent red shortness of a primitive plate due to S as an impurity, and to provide the plate with a higher refining degree.

However, when Mn possessing a reinforcing property is added into steel in an amount of 0.5% or more, the steel is considerably increased in strength, thereby bringing about such a problem of formability (punchability) that a specific die made of high speed steel, cemented carbide, or the like as a press material is required upon punching of a product.
Patent Document 1: JP2003-41350A
Patent Document 2: JP2005-36266A

### DISCLOSURE OF INVENTION

### PROBLEM TO BE SOLVED BY THE INVENTION

It is therefore an object of the present invention to provide: a method capable of manufacturing such a kind of gasket-oriented steel plate excellent in elasticity and formability, in a manner to allow for reduction of a breaking elongation of the steel plate to thereby improve a formability (punchability) thereof while improving a proof stress of the steel plate against a repeated stress from a discharge valve to thereby maintain a higher elasticity of the steel plate; and a gasket withstandable to the repeated stress from the discharge valve.

The other objects of the present invention will become apparent from the following description.

### MEANS FOR SOLVING PROBLEM

The above object is carried out by the following inventions.

The invention recited in claim 1 resides in a manufacturing method of a gasket-oriented steel plate, comprising the steps of:
annealing a starting steel material having a composition of: Mn less than 0.5%, Ni less than 2.0%, and Cr less than 12.0%; and
subsequently temper rolling the annealed starting steel material at a rolling reduction ratio of 10% or more.

The invention recited in claim 2 resides in the manufacturing method of a gasket-oriented steel plate according to claim 1, further comprising the steps in the order of:
passing the starting steel material through a hot rolling step, an acid pickling step, and a cold rolling step, before the annealing step.

The invention recited in claim 3 resides in the manufacturing method of a gasket-oriented steel plate according to claim 1 or 2, wherein the starting steel material contains Mn in an amount of 0.3% or less.

The invention recited in claim 4 resides in a gasket formed by adopting a gasket-oriented steel plate obtained by the manufacturing method of a gasket-oriented steel plate according to any one of claims 1 to 3.

### EFFECT OF THE INVENTION

According to the present invention, it becomes possible: to manufacture such a kind of gasket-oriented steel plate excellent in elasticity and formability, in a manner to allow for reduction of a breaking elongation of the steel plate to thereby improve a formability (punchability) thereof while improving a proof stress of the steel plate against a repeated stress from a discharge valve to thereby maintain a higher elasticity of the steel plate; and to provide a gasket withstandable to the repeated stress from the discharge valve.

### BRIEF DESCRIPTION OF DRAWINGS

FIG. 1 is a cross-sectional view of an example of a rubber coated metal; and
FIG. 2 is a plan view of an example of a gasket in a compressor of an automobile air conditioner.

### EXPLANATIONS OF LETTERS OR NUMERALS

- 1:: steel plate
- 2:: adhesive layer
- 3:: rubber layer
- 4:: surface coating material layer
- 5:: bead
- 6:: retainer

### BEST MODE(S) FOR CARRYING OUT THE INVENTION

Embodiments of the present invention will be described hereinafter.

In the present invention, the starting steel material upon manufacturing a gasket-oriented steel plate is provided by preparing a general-purpose product such as SPCC, SPCD, SPCE, SPCF, and SPCG prescribed by JIS G3141 (cold rolled steel plate and steel band) in a manner to contain Mn as a chemical component in an amount less than 0.5%. Further, the starting steel material is configured to contain carbon as an additional component in an amount of 0.15% or less. Other additional components contained in the starting steel material are P, S, and the like, and Fe as a remaining component.

The starting steel material in the present invention contains, in its chemical composition, Ni in an amount less than 2.0%, preferably less than 1.5%, and Cr in an amount less than 12.0%, and preferably less than 10%. Thus, Ni and Cr, if any, are contained in such smaller amounts as noted just above, respectively, so that the starting steel material of the present invention is never matured into such a stainless steel plate as described in JP2005-36266A (Patent Document 2).

In the present invention, Mn is contained in the starting steel material in an amount less than 0.5%, thereby exhibiting the following effects. Namely, addition of manganese exhibiting a reinforcing property in an amount of 0.5% or more has considerably increased a strength of a steel, thereby bringing about such a problem of punchability that a specific die made of high speed steel, cemented carbide, or the like as a press material is required upon punching a product. However, addition of manganese in an amount less than 0.5% brings about such an advantage that a die made of SKD11, which is a general-purpose material, can form the steel plate.

The method of the present invention for manufacturing a gasket-oriented steel plate is characterized in that the method comprises the steps of: annealing the above described starting steel material; and subsequently conducting a temper rolling treatment at a rolling reduction ratio of 10% or more.

Further, although the present invention is not limited in terms of a step(s) before the annealing, it is possible for the starting steel material to be successively passed through the steps in the order of a hot rolling step, an acid pickling step, and a cold rolling step, for example.

The molten steel having been prepared to have the above chemical components is smelted by a typically known smelting method using a converter or the like, and then prepared by a typically used casting method such as a continuous casting method into a material to be rolled then.

Next, the material to be rolled is heated to about 1,200°C, and then successively stretched by rolls while the material is still in a hot state, in a manner to hot roll the material into a thickness on the order of 2 to 4mm at about 600°C. The hot rolling may be adjusted in terms of a temperature for processing, a rate for cooling, and the like, thereby allowing for obtainment of various steel materials.

The thermally stretched plate having been hot rolled into a thickness of 2 to 4 mm is to be preferably acid pickled. The method for acid pickling is not particularly limited, and examples of usable acids include various organic acids or inorganic acids.

After acid pickling, the plate is cold rolled at an ordinary temperature into a thickness on the order of 0.1 mm to several mm. "Cold" means that a heat is not particularly applied. It is possible here to conduct annealing after cold rolling.

In the present invention, temper rolling is conducted after annealing. It is important in the present invention to set the rolling reduction ratio at 10% or more.

The rolling reduction ratio is also called a "temper rolling reduction ratio" hereinafter.

Even if all requirements are the same as the present invention, when the temper rolling reduction ratio is less than 10%, it will lead to insufficient strain hardening, thereby failing to obtain an appropriate proof stress (of 290MPa or more, preferably 315MPa or more) and failing to withstand a stress from a discharge valve, and thereby causing a damage of a steel plate.

Contrary, as in the present invention, when the temper rolling reduction ratio is made to be 10% or more, the temper rolled steel plate is subjected to occurrence of a strain hardening phenomenon where the steel plate is enabled to withstand a repeated stress from a discharge valve, thereby enabling to manufacture such a kind of gasket-oriented steel plate excellent in elasticity and formability, in a manner that the strain hardening phenomenon allows to decrease a breaking elongation of the plate down to less than 33% (preferably down to 30% or less) to thereby improve the formability (punchability) thereof while improving a proof stress thereof to maintain a higher elasticity. Namely, it is then possible to obtain an SPCC plate having a breaking elongation decreased down to less than 33% (preferably down to 30% or less) to thereby exemplarily decrease burrs, which plate can be in turn formed by an inexpensive die.

The gasket of the present invention is obtainable by exemplarily forming and fabricating the above manufactured gasket-oriented steel plate into a rubber coated metal. Examples of its shape include one shown in FIG. 2.

The obtained gasket exhibits an effect to withstand a repeated stress from a discharge valve, by virtue of the properties of the steel plate as a starting material of the gasket.

### Examples

The effects of the present invention will be exemplified hereinafter based on Examples.

Example 1 to Example 3, and Comparative Example 1 to Comparative Example 4:
Steel plates listed in Table 1 were formed into rubber coated metals, respectively, and the following evaluations were conducted.

Component analysis values of reinforcing components were obtained as analysis values of molten steels, respectively.

### <Evaluation>

### (Mechanical properties)

No. 5 test pieces specified in JIS Z 2201 were used, and were each subjected to measurement of a proof stress (MPa), a tensile strength (MPa), and a breaking elongation (%) all in conformity to JIS Z 2241 by the following measurement, while adopting a rolling direction of each steel plate as a test direction.

### (Punchability)

Die: SKD11 was used. In case of failure of punching by means of SKD11, a high speed steel was used.
Amount of burr: An amount of burr was measured by a shape measuring instrument after punching, setting the clearance of 0.06mm between the punch and the die.
Cross-section state: A sheared section or broken section after punching was visually observed, to evaluate whether it was homogeneous or inhomogeneous.

### (Durability to repeated stress)

Each rubber coated metal was formed into a gasket, and evaluated for presence/absence of retainer-crack due to a repeated load from a discharge valve.

### <Evaluation result>

The evaluation result is shown in Table 1.

**[Table 1]**

| | | Ex.1 | Ex. 2 | Ex. 3 | Com. Ex. 1 | Com. Ex. 2 | Com. Ex. 3 | Com. Ex. 4 |
|---|---|---|---|---|---|---|---|---|
| Thickness (mm) | | 0.6 | 0.6 | 0.6 | 0.6 | 0.6 | 0.6 | 0.6 |
| Reinforcing component | Carbon amount (%) | 0.06 | 0.06 | 0.06 | 0.04 | 0.14 | 0.11 | 0.06 |
| | Manganese amount (%) | 0.3 | 0.3 | 0.3 | 0.3 | 0.7 | 1.2 | 0.3 |
| Rolling reduction ratio (%) | | 10 | 12 | 14 | 2 | 2 | 2 | 5 |
| Mechanical property | Proof stress {MPa} | 310 | 340 | 400 | 286 | 326 | 530 | 290 |
| | Tensile strength (MPa) | 400 | 400 | 412 | 394 | 462 | 800 | 400 |
| | Breaking elongation (%) | 30 | 23 | 17 | 35 | 35 | 17 | 34 |
| Punchability | Die | SKD11 | SKD11 | SKD11 | SKD11 | SKD11 | High speed steel* | SKD11 |
| | Burr amount (µm) | 60 | 60 | 60 | 100 | 100 | - | 60 |
| | Cross-section state | Homogeneous | Homogeneous | Homogeneous | Inhomogeneous | Inhomogeneous | - | Inhomogeneous |
| Durability against repeated stress | | Cracks not caused | Cracks not caused | Cracks not caused | Occurence of cracks | Occurence of cracks | Cracks not caused | Occurence of cracks |
| Note | | | Condition of mass-production | | | | | |

| | | | | | | | | |
|---|---|---|---|---|---|---|---|---|
| "Not punchable by means of SKD11 | | | | | | | | |

The steel plates of Examples 1 to 3 were each punchable by means of SKD11, less in amount of burr, and homogeneous in cross-section state. Further, retainer-cracks were not caused in gaskets manufactured from Examples 1 to 3. Example 2 is more suitable for mass-production.

Comparative Example 1 (rolling reduction ratio of 2%) exhibited a proof stress and a breaking elongation, out of appropriate ranges, respectively. Comparative Example 2 (rolling reduction ratio of 2%, and manganese amount of 0.7%) exhibited a proof stress by virtue of the increased manganese amount, but exhibited a breaking elongation exceeding an appropriate range. Comparative Examples 1 and 2 exhibited more amounts of burr than Examples 1 to 3, and cross-section states of Comparative Examples 1 and 2 were inhomogeneous, respectively. Retainer-cracks were found in gaskets formed from Comparative Examples 1 and 2.

Comparative Example 3 (rolling reduction ratio of 2%, and manganese amount of 1.2%) exhibited an excessively increased strength, and was not punchable by means of SKD11.

Comparative Example 4 (rolling reduction ratio of 5%) exhibited a breaking elongation exceeding an appropriate range, and its cross-section state was inhomogeneous. Further, retainer-cracks were found in a gasket formed from Comparative Example 4.

## Claims

1. A manufacturing method of a gasket-oriented steel plate, comprising the steps of:
annealing a starting steel material having a composition of: Mn less than 0.5%, Ni less than 2.0%, and Cr less than 12.0%; and
subsequently temper rolling the annealed starting steel material at a rolling reduction ratio of 10% or more.

2. The manufacturing method of a gasket-oriented steel plate according to claim 1, further comprising the steps in the order of:
passing the starting steel material through a hot rolling step, an acid pickling step, and a cold rolling step, before the annealing step.

3. The manufacturing method of a gasket-oriented steel plate according to claim 1 or 2, wherein the starting steel material contains Mn in an amount of 0.3% or less.

4. A gasket formed by adopting a gasket-oriented steel plate obtained by the manufacturing method of a gasket-oriented steel plate according to any one of claims 1 to 3.
